Europäisches Patentamt

European Patent Office

Office européen des brevets

(11) Veröffentlichungsnummer: **0 393 548**
**A1**

## (12) EUROPÄISCHE PATENTANMELDUNG

(21) Anmeldenummer: **90107151.4**

(22) Anmeldetag: **14.04.90**

(51) Int. Cl.5: **C08G 69/36, C08G 69/28**

(30) Priorität: **19.04.89 DE 3912767**

(43) Veröffentlichungstag der Anmeldung:
**24.10.90 Patentblatt 90/43**

(84) Benannte Vertragsstaaten:
**BE CH DE ES FR GB IT LI NL**

(71) Anmelder: **BASF Aktiengesellschaft
Carl-Bosch-Strasse 38
D-6700 Ludwigshafen(DE)**

(72) Erfinder: **Pipper, Gunter
Schlangenthaler Weg 10
D-6702 Bad Duerkheim(DE)**
Erfinder: **Koch, Eckhard Michael, Dr.
Merowingerstrasse 8
D-6701 Fussgoenheim(DE)**

(54) Verfahren zur kontinuierlichen Herstellung von Copolyamiden.

(57) Verfahren zur kontinuierlichen Herstellung von Copolyamiden, die Einheiten der Formel $-NH-(CH_2)_4-NH$ enthalten, wobei man

a) eine wäßrige Lösung von 5 bis 80 Gew.% eines Salzes aus 1,4-Diaminobutan und Dicarbonsäuren und 20 bis 95 Gew.% weiteren polyamid bildenden Ausgangsstoffen unter Zusatz von Diaminen unter Verdampfen von Wasser unter erhöhtem Druck auf eine Temperatur oberhalb des Schmelzpunktes des Copolyamids erhitzt,

b) Dampfphase und Präpolymeres innig miteinander in Berührung bringt,

c) Präpolymeres von der Dampfphase trennt, Polymeres nach einer Gesamtverweilzeit von höchstens 30 min austrägt und

d) aus der Dampfphase Diamine abtrennt und nach a) zurückführt.

EP 0 393 548 A1

## Verfahren zur kontinuierlichen Herstellung von Copolyamiden

Gegenstand der Erfindung ist ein Verfahren zur kontinuierlichen Herstellung von Copolyamiden, die Einheiten der Formel -NH(CH₂)₄NH- enthalten.

Aus der EP-A 231 545 ist ein Verfahren zur Herstellung von Copolyamiden bekannt, bei dem man ein Gemisch aus einem Salz von 1,4-Diaminobutan mit Adipinsäure und einem Salz von 1,4-Diaminobutan mit Terephthalsäure in Gegenwart von Wasser zunächst auf eine Temperatur von 210 °C für einen Zeitraum von 1 Stunde erhitzt und nach dem Entspannen das so erhaltene feste Präpolymere zerkleinert und anschließend in fester Phase weiterkondensiert. Dieses Verfahren hat den Nachteil, daß es zeitaufwendig ist und abgespaltene Amine verlorengehen.

Nach einem anderen in der EP-A 210 511 beschriebenen Verfahren wird ein Salz aus 1,4-Diaminobutan und Adipinsäure als wäßrige Lösung in einem Rohr bei einer Temperatur von etwa 300 °C in einer Verweilzeit bis zu 30 Minuten unter erhöhtem Druck kondensiert und das Gemisch aus Dampf und Präpolymeren entspannt und anschließend das Präpolymere weiter in fester Phase kondensiert.

Ferner ist aus der EP-A 160 337 ein Verfahren bekannt, bei dem man eine wäßrige Lösung des Salzes aus 1,4-Diaminobutan und Terephthalsäure zunächst unter erhöhtem Druck in einem Autoklaven vorkondensiert und das Vorkondensat in ein beheiztes Rohr entspannt, wobei das Vorkondensat als flüssige Schmelze aus dem Rohr ausgetragen wird. Die letztgenannten Verfahren haben ebenfalls den Nachteil, daß sie erhebliche Reaktionszeiten benötigen, die abgespaltenen Amine verlorengehen und durch die langen Verweilzeiten im schmelzflüssigen Zustand eine Schädigung des Polymeren nicht auszuschließen ist.

Es war deshalb die technische Aufgabe gestellt, ein Verfahren zur kontinuierlichen Herstellung von Copolyamiden die Einheiten, die sich von 1,4-Diaminobutan ableiten enthalten, zur Verfügung zu stellen, das in kurzer Zeit verläuft, abgespaltene Amine zurückgewonnen werden, die Bildung von vernetzten Polymeren zurückgedrängt wird Nebenprodukte abgetrennt und Verfärbungen vermieden werden.

Diese Aufgabe wird gelöst in einem kontinuierlichen Verfahren zur Herstellung von Copolyamiden die Einheiten der Formel -NH(CH₂)₄-NH-enthalten, wobei man

A) 5 bis 80 Gew.% eines Salzes aus 1,4-Diaminobutan und äquimolaren Mengen einer $C_4$- bis $C_{18}$-Dicarbonsäure und

B) 20 bis 95 Gew.% eines Lactams mit 6 bis 12 Kohlenstoffatomen im Ring, einer Aminocarbonsäure mit 6 bis 12 Kohlenstoffatomen oder eines Salzes aus einem $C_4$- bis $C_{12}$-Diamin und äquimolaren Mengen einer $C_4$-bis $C_{18}$-Dicarbonsäure mit der Maßgabe, daß die Dicarbonsäuren der Komponenten A und B nicht identisch sind in Gegenwart von Wasser auf polyamidbildende Temperaturen unter erhöhtem Druck unter Bildung einer Dampfphase und eines Polykondensats erhitzt und die Dampfphase vom Polykondensat abtrennt, dadurch gekennzeichnet, daß man

a) eine wäßrige Lösung eines Gemisches aus den Komponenten A und B sowie zusätzlich 0,5 bis 20 Mol.% mindestens eines Diamins, bezogen auf die Menge an 1,4-Diaminobutan durch eine Verdampferzone unter Verdampfen von Wasser unter einem Druck von 1 bis 10 bar bei einer Temperatur oberhalb des Schmelzpunktes des Copolyamids leitet und eine Dampfphase und ein Vorkondensat erhält,

b) das Vorkondensat in schmelzflüssigem Zustand mit der Dampfphase in einer unmittelbar anschließenden Stoffaustauschzone, die mit Einbauten versehen ist, innig miteinander in Berührung bringt und eine Dampfphase und ein Polykondensat erhält,

c) das Polykondensat von der Dampfphase trennt und ein granulierfähiges Polykondensat austrägt, mit der Maßgabe, daß die Gesamtverweilzeit des Polykondensats im schmelzflüssigen Zustand in den Stufen a), b) und c) 30 Minuten nicht überschreitet und

d) aus der in Stufe c) abgetrennten Dampfphase durch Destillation Diamine gewinnt und in die Stufe a) zurückführt.

Das neue Verfahren hat den Vorteil, daß man in kurzer Zeit granulierfähiges Copolyamid erhält, das sich besonders für die Nachkondensation in fester Phase eignet. Weiter hat das neue Verfahren den Vorteil, daß wenig Pyrrolidinendgruppen gebildet werden und abgespaltene Diamine und ggf. Lactame zurückgewonnen und Nebenprodukte ausgetragen werden. Ferner hat das neue Verfahren den Vorteil, daß Vernetzung und somit Gelbildung vermieden wird und die Verfärbung reduziert wird.

Für die Herstellung der erfindungsgemäßen Copolyamide verwendet man als Komponente A 5 bis 80 Gew.% eines Salzes aus 1,4-Diaminobutan und äquimolare Mengen einer $C_4$- bis $C_{18}$-Dicarbonsäure. Bevorzugte Dicarbon säuren sind Alkandicarbonsäuren mit 6 bis 12 Kohlenstoffatomen, insbesondere geradkettige Dicarbonsäuren der genannten Kohlenstoffzahl, wie Adipinsäure, Sebacinsäure oder Dodecandisäure. Ferner sind bevorzugte Dicarbonsäuren solche, die sich von Benzol, Biphenyl oder Naphthalin ableiten und zwei nicht benachbarte Carboxylgruppen enthalten, wie Terephthalsäure, Isophthalsäure,

2

Naphthalin-1,6-dicarbonsäure oder 4,4'-Diphenyldicarbonsäure. Besondere Bedeutung haben Adipinsäure, Terepthalsäure und Isophthalsäure erlangt.

Als Komponente B verwendet man 20 bis 95 Gew.% eines Lactams mit 6 bis 12 Kohlenstoffatomen im Ring. Geeignete Lactame sind beispielsweise Caprolactam, Capryllactam oder Laurinlactam. Besonders bevorzugt ist Caprolactam. Ferner sind als Komponente B geeignet ω-Aminocarbonsäuren mit 6 bis 12 Kohlenstoffatomen, insbesondere ω-Aminoalkancarbonsäuren der genannten Kohlenstoffzahl wie ω-Aminocapronsäure oder ω-Aminolaurinsäure, bevorzugt ω-Aminocapronsäure.

Anstatt der genannten Lactame oder Aminocarbonsäuren werden als Komponente B) verwendet die genannten Mengen eines Salzes aus einem $C_4$- bis $C_{12}$-Diamin und äquimolaren Mengen einer $C_4$- bis $C_{18}$-Dicarbonsäure mit der Maßgabe, daß die Dicarbonsäuren der Komponenten A) und B) nicht identisch sind.

Bevorzugte Diamine sind $C_4$- bis $C_{12}$-Alkandiamine, insbesondere geradkettige α-ω-Alkandiamine der genannten Kohlenstoffzahl wie 1,4-Diaminobutan, Hexamethylendiamin, Octamethylendiamin oder Decamethylendiamin. Besondere Bedeutung haben 1,4-Diaminobutan und Hexamethylendiamin erlangt.

Als Dicarbonsäuren werden bevorzugt Alkandicarbonsäuren mit 6 bis 12 Kohlenstoffatomen insbesondere geradkettige Alkandicarbonsäuren der genannten Kohlenstoffzahl, wie Adipinsäure, Sebacinsäure oder Dodecandisäure, ferner Dicarbonsäuren die sich vom Benzol Diphenyl oder Naphthalin ableiten, insbesondere solche die sie vom Benzol ableiten, wie Terephthalsäure, Isophthalsäure, 1,6-Naphthalindicarbonsäure oder 4,4'-Diphenyldicarbonsäure. Besondere Bedeutung haben Adipinsäure, Terephthalsäure und Isophthalsäure erlangt. Es gilt die Maßgabe, daß die Dicarbonsäuren der Komponenten A und B nicht identisch sind.

Es ist auch möglich, Mischungen aus Lactamen, Aminocarbonsäuren und Salzen von Diaminen und Dicarbonsäuren als Komponente B einzusetzen. Es versteht sich, daß die erzeugten Copolyamide entsprechend den Komponenten A und B aufgebaut sind.

Die genannten Salze werden in der Regel durch Mischen der Ausgangsstoffe im äquimolekularen Verhältnis in wäßriger Lösung hergestellt. Es ist auch möglich Diamine vorzulegen und mit der Dicarbonsäure zu neutralisieren oder umgekehrt. Geeignete Lösungen haben in der Regel 30 bis 70 Gew.%, insbesondere 40 bis 65 Gew.%, der genannten Salze. Diese Salze weisen in der Regel eine pH-Wert von 7,2 bei 20°C auf. Besonders vorteilhaft werden die genannten Salze als konzentrierte wäßrige Lösungen verwendet. Zweckmäßig werden die Lösungen der Ausgangsstoffe A und B vor ihrer Verwendung gemischt und haben z.B. eine Temperatur von 50 bis 100°C, insbesondere 80 bis 100°C.

In der Stufe a) wird eine wäßrige Lösung eines Gemisches aus den Komponenten A und B sowie zusätzlich 0,5 bis 20 Mol.% Diamine, bezogen auf die eingesetzte Menge an 1,4-Diaminobutan durch eine Verdampferzone unter Verdampfen von Wasser unter einem Druck von 1 bis 10 bar bei einer Temperatur oberhalb des Schmelzpunkts des Copolyamids geleitet und eine Dampfphase sowie ein Vorkondensat erhalten.

Vorteilhaft hält man in der Stufe a) eine Temperatur von 260 bis 330°C, insbesondere von 280 bis 310°C ein. Es versteht sich, daß die Temperatur stets so gewählt wird, daß das erzeugte Vorkondensat immer im schmelzflüssigen Zustand vorliegt. Vorzugsweise hält man einen Druck von 6 bis 9 bar ein. Durch ausreichende Wärmeübertragung wird sichergestellt, daß das Wasser möglichst rasch verdampft und die Reaktion eingeleitet wird, so daß am Ende der Verdampferzone ein Umsatz von mindestens 93 %, insbesondere 94 bis 97 % erzielt wird. Vorteilhaft hält man in der Verdampferzone eine Verweilzeit von 60 bis 120, insbesondere 70 bis 100 Sekunden ein. Die zusätzlich mitverwendeten Diamine sind zweckmäßig diejenigen, die in den verwendeten Ausgangssalzen enthalten sind, besonders bevorzugt wird als leichtflüchtigstes Diamin 1,4-Diaminobutan zugesetzt.

Die Verdampferzone ist vorteilhaft rohrförmig ausgebildet. Zweckmäßig verwendet man bei der technischen Durchführung Röhrenbündel. Bewährt hat es sich, wenn der Querschnitt der Rohre perodisch wiederkehrend zylindrisch und spaltförmig ausgebildet ist. Eine andere vorteilhafte Ausführung der Verdampferzone ist die Verwendung von Röhren oder Röhrenbündeln, bei denen die einzelnen Röhren mit Einbauten versehen sind und um große Oberfläche zu schaffen. Dies wird beispielsweise erreicht durch Bestücken mit Füllkörpern, wie Raschigringen, Metallringen oder insbesondere Füllkörpern aus Drahtnetz.

Das Vorkondensat wird im schmelzflüssigen Zustand zusammen mit der Dampfphase in einer unmittelbar anschließenden Stoffaustauschzone (Stufe b)), die mit Einbauten versehen ist, innig miteinander in Berührung gebracht und eine Dampfphase und ein Polykondensat erhalten. Die Dampfphase besteht im wesentlichen aus Wasserdampf und geringen Mengen an 1,4-Diaminobutan und Pyrrolidin sowie gegebenenfalls einem weiteren Diamin sofern als Komponeten B ein Salz mit einem anderen Diamin oder einem Lactam falls ein solches verwendet wird.

In der Stufe b) hält man vorteilhaft eine Temperatur von 260 bis 330°C, insbesondere 280 bis 320°C,

3

sowie einen Druck von 1 bis 10 bar, insbesondere von 6 bis 9 bar, ein. Zweckmäßig wählt man die gleichen Druck- und Temperaturbedingungen wie in der Stufe a). Vorteilhaft hält man eine Verweilzeit von 60 bis 120 Sekunden, insbesondere 70 bis 100 Sekunden, ein.

Zweckmäßig ist die Stufe b) wie Stufe a) röhrenförmig, insbesondere als Röhrenbündel ausgebildet. Die Stoffaustauschzone ist mit Einbauten versehen z.B. Füllkörper wie Raschigringe, Metallringe oder insbesondere Füllkörpern aus Drahtnetz. Diese Einbauten bewirken eine große Oberfläche, durch welche die Phasen d.h. Vorkondensat und Dampf innig in Berührung gebracht werden. Dies bewirkt, daß die Menge des mit Wasserdampf freigesetzten Diamins und ggf. Lactams erheblich vermindert wird. Es hat sich deshalb bewährt, wenn die Oberfläche in der Stoffaustauschzone 0,5 bis 2 m$^2$ je Liter beträgt.

Das aus der Stoffaustauschzone b) austretende zweiphasige Gemisch aus Dampf und Polykondensat wird in einer Trennzone c getrennt. Die Trennung erfolgt in der Regel von selbst aufgrund der physikalischen Unterschiede, wobei sich im unteren Teil der Trennzone das Polykondensat ansammelt und als granulierfähiges Polykondensat ausgetragen wird. Die freiwerdenden Brüden werden ebenfalls ausgetragen und bestehen im wesentlichen wie vorgenannt aus Wasserdampf in geringen Mengen an Diamin und Pyrrolidin sowie ggf. Lactamen.

Die Verweilzeit des schmelzflüssigen Polymeren in den Stufen a), b) und c) beträgt insgesamt nicht mehr als 30 Minuten vorteilhaft von 2 bis 30 Minunten, insbesondere 3 bis 10 Minuten. Zweckmäßig hält man in der Stufe c) die gleichen Temperaturen und Druckbedingungen wie in Stufe b) aufrecht.

Das so erhaltene Polykondensat hat vorteilhaft eine Aminoendgruppenzahl von 150 bis 400 mäq/kg vorteilhaft von 250 bis 300 mäq/kg sowie eine relative Viskosität von 1,4 bis 1,8.

Aus der in Stufe c) erhaltenen Dampfphase werden durch Destillation Diamine gewonnen und diese gegebenenfalls nach Zusatz von weiterem Diamin z.B. 1,4-Diaminobutan in die Stufe a) zurückgeführt. Vorteilhaft wird die Dampfphase in einer Kolonne z.B. mit 5 bis 15 theroetischen Böden destilliert, wobei man am Kopf der Kolonne vorteilhaft 0,1 bis 0,5 l wasser/kg Dampf aufgibt und als Kopfprodukt wäßriges Pyrrolidin und als Sumpfprodukt eine wäßrige Lösung von Diaminen erhält. Letztere werden wiederum nach Ergänzung mit Diaminen in die Stufe a) zurückgeführt. Die Menge der in Stufe a) zugeführten Diamine richtet sich zweckmäßig danach, daß in den ausgetragenen Polykondensaten der vorgenannte Aminoendgruppengehalt erzielt wird.

Das erhaltene Polykondensat wird vorteilhaft in fester Phase in Gegenwart von Inertgasen wie Stickstoff oder Wasserdampf, insbesondere mit überhitztem Wasserdampf, z.B. bei einer Temperatur von 200 bis 270 °C, unterhalb des Schmelzpunkts des Polykondensats bis zur gewünschten Endviskosität weiter kondensiert. Hierbei werden Polykondensat und Inertgas zweckmäßig im Gegenstrom geführt. Um eine hohe Raumzeitausbeute und ein hohes Molekulargewicht zu erreichen, verwendet man für die Festphasenkondensation vorteilhaft ein Polykondensat mit einer Aminoendgruppenzahl von 150 bis 400, insbesondere 250 bis 300 mäq/kg und einer relativen Viskosität von 2 bis 3.

Übliche Zusatzstoffe wie Glasfasern, mineralische Füllstoffe, Stabilisatoren, Gleitmittel, Flammschutzmittel werden vorteilhaft dem aus der Stufe c) ausgetragenen schmelzflüssigen Polykondensat zugeführt und konfektioniert und anschließend das Polykondensat in fester Phase weiterkondensiert.

Copolyamide die nach dem Verfahren der Erfindung erhältlich sind, eignen sich zur Herstellung von Formkörpern durch Spritzgießen oder Extrusion ferner zur Herstellung von Fäden und Fasern.

Das Verfahren nach der Erfindung sei an folgenden Beispielen veranschaulicht.


Beispiel 1 bis 5

Aus äquimolaren Mengen von 1,4-Diaminobutan und einer Dicarbonsäure wird eine konzentrierte Lösung (Komponente A) von 94° hergestellt und mit einer konzentrierten wäßrigen Lösung eines Salzes aus Diaminen und Dicarbonsäuren (Komponente B) oder Caprolactam gemischt. Die Konzentration richtet sich entsprechend Tabelle 1 nach der Löslichkeit. Diese Lösung wird mittels einer Dosierpumpe in ein vertikales 3 m langes Verdampferrohr dosiert. Das Verdampferrohr hat einen Inhalt von 180 ml und besteht aus perodisch altanierenden zylindrischen und spaltförmigen Abschnitten. Die Wärmetauscherfläche beträgt ca. 1400 cm$^2$. Durch einen rasch umlaufenden flüssigen Wärmeträger wird bei einer Temperatur von 308 °C Wasser rasch verdampft und ein Präkondensat unter einem Druck von 8 bar hergestellt. Die Verweilzeit im Verdampfer beträgt im Mittel 85 Sekunden. Das aus dem Verdampfer austretende Gemisch von Präkondensat und Dampf hat eine Temperatur von 305 °C wird in die unmittelbar anschließende Stoffaustauschzone geleitet, die mit Füllkörpern beschickt ist. Die Stoffaustauschzone hat eine Oberfläche von 2 m$^2$. Die Stoffaustauschzone wird mit der gleichen Temperatur und unter dem gleichen Druck wie der Verdampfer betrieben. In der Stoffaustauschzone erfolgt ein inniger Austausch zwischen diaminhaltiger Gasphase und kondensierendem Präpolymerisat. Die Verweilzeit in dieser Zone beträgt im Mittel 90 Sekunden. Das aus der Stoffaustauschzone austretende Gemisch aus Dampf und Polykondensat wird in ein Abscheidegefäß geleitet, der Dampf abgetrennt und das Polykondensat ausgetragen. Die Gesamtverweilzeit im schmelzflüssigen Zustand in der Verdampferzone, Stoffaustauschzone und Trennzone beträgt im Mittel 4 Minuten.

Die erhaltenen Brüden (die Zusammensetzung ist aus der Tabelle 1 zu entnehmen) werden mit einer Temperatur von 300 °C in eine Kolonne mit 10 theoretischen Böden geleitet, und aufgetrennt. Am Kopf der Kolonne werden 900 ml Wasser pro Stunde żur Steigerung des Trenneffektes aufgegeben. Die Temperatur am Kolonnenkopf beträgt ca. 175 °C. Das gebildete Pyrrolidin wird praktisch quantitativ über den Kopf der Kolonne abgeführt. Die am Boden der Kolonne ablaufende aminhaltige und ggf. lactamhaltige Lösung wird in den Verdampfer (Stufe a) zurückgeführt. Der zurückgeführten Diaminlösung wird zusätzlich eine Menge an 1,4-Diaminobutan zur Ergänzung zugesetzt.

Das so erhaltene Polykondensat wird kontinuierlich in fester Phase im Gegenstrom mit überhitztem Wasserdampf bis zur gewünschten Viskcsität weiterkondensiert. Einzelheiten sind aus der nachfolgenden Tabelle 1 zu entnehmen.

Tabelle 1

| Beispiel | 1 | 2 | 3 | 4 | 5 |
|---|---|---|---|---|---|
| Komponenten A + B | 46/4T | 66/4T | 66/4T | 6/4T | 66/4T |
| Gew.% | 80:20 | 80:20 | 60:40 | 60:40 | 50:50 |
| Feststoffanteil der Ansatzlösung (Gew.%) | 50 | 60 | 50 | 50 | 40 |
| Zulauf (kg/h) | 7,0 | 7,0 | 7,1 | 7,3 | 5,0 |
| zusätzliche Zugabe von 1,4-Diaminobutan (g/h) | 160 | 80 | 100 | 80 | 80 |
| **Polykondensat nach Stufe c)** | | | | | |
| $\eta_{rel}$[1] | 1,54 | 1,49 | 1,63 | 1,55 | 1,57 |
| Endgr.: -COOH mäq/kg | 74 | 67 | 80 | 123 | 64 |
| : -NH$_2$ mäq/kg | 179 | 443 | 508 | 148 | 210 |
| **Gasphasenzusammensetzung aus Stufe c** | | | | | |
| Brüden vor Kolonne: | | | | | |
| 1,4-Diaminobutan (Gew.%) | 9,0 | 4,0 | 6,0 | 3,0 | 7,0 |
| Caprolactam (Gew.%) | | | | 2,8 | |
| Sumpf: | | | | | |
| 1,4-Diaminobutan (Gew.%) | 8,0 | 3,7 | 5,4 | 2,4 | 6,3 |
| Caprolactam (Gew.%) | | | | 2,8 | |
| Brüden nach Kolonne: | | | | | |
| Pyrrolidin (Gew.%) | 0,85 | 0,3 | 0,6 | 0,6 | 0,7 |
| 1,4-Diaminbutan (Gew.%) | < 0,05 | < 0,01 | < 0,01 | < 0,01 | < 0,05 |
| Caprolactam (Gew.%) | | | | < 0,01 | |

Tabelle 1 (Fortsetzung)

| Beispiel | 1 | 2 | 3 | 4 | 5 |
|---|---|---|---|---|---|
| **Endprodukt Nachkonden-** | | | | | |
| **sation in fester Phase** | | | | | |
| $\eta_{rel}$[1] | 2,15 | 2,84 | 2,5 | 1,84 | 2,08 |
| Endgr.: -COOH mäq/kg | 10 | 12 | 26 | 55 | 21 |
| : -NH$_2$ mäq/kg | 50 | 167 | 121 | 108 | 93 |
| FP(DSC) (°C) | 278 | 231 | 243 | 220 | 255 |
| **Temperbedingungen** | | | | | |
| Zeit (h) | 35 | 48 | 36 | 48 | 30 |
| Temperatur (°C) | 260 | 220 | 235 | 210 | 240 |

[1] gemessen mit c = 0,5 g in 100 ml 96 %iger Schwefelsäure

Erläuterungen:

46 = Salz aus 1,4-Diaminobutan und Adipinsäure

4T = Salz aus 1,4-Diaminobutan und Terephthalsäure

66 = Salz aus Hexamethylendiamin und Adipinsäure

6 = Caprolactam

**Ansprüche**

1. Verfahren zur kontinuierlichen Herstellung von Copolyamiden, die Einheiten der Formel -HN(CH$_2$)$_4$- NH- enthalten, wobei man

A) 5 bis 80 Gew.% eines Salzes aus 1,4-Diaminobutan und äquimolaren Mengen einer C$_4$- bis C$_{18}$- Dicarbonsäure und

B) 20 bis 95 Gew.% eines Lactams mit 6 bis 12 Kohlenstoffatomen im Ring, einer $\omega$-Aminocarbonsäure mit 6 bis 12 Kohlenstoffatomen oder eines Salzes aus einem C$_4$- bis C$_{12}$-Diamin und äquimolaren Mengen einer C$_4$- bis C$_{18}$-Dicarbonsäure mit der Maßgabe, daß die Dicarbonsäuren der Komponenten A) und B) nicht identisch sind,

in Gegenwart von Wasser auf polyamidbildende Temperaturen unter erhöhtem Druck unter Bildung einer Dampfphase und eines Polykondensats erhitzt und die Dampfphase vom Polykondensat abtrennt, dadurch gekennzeichnet, daß man

a) eine wäßrige Lösung eines Gemisches aus den Komponenten A und B sowie zusätzlich 0,5 bis 20 Mol.% eines Diamins, bezogen auf die Menge an 1,4-Diaminobutan durch eine Verdampferzone unter Verdampfen von Wasser unter einem Druck von 1 bis 10 bar bei einer Temperatur oberhalb des Schmelzpunktes des Copolyamids leitet und eine Dampfphase und ein Vorkondensat erhält,

b) das Vorkondensat im schmelzflüssigen Zustand mit der Dampfphase in einer unmittelbar anschließenden Stoffaustauschzone, die mit Einbauten versehen ist, innig miteinander in Berührung bringt und eine Dampfphase und ein Polykondensat erhält,

c) das Polykondensat von der Dampfphase trennt und ein granulierfähiges Polykondensat austrägt, mit der Maßgabe, daß die Gesamtverweilzeit des Polykondensats in den Stufen a, b und c 30 Minuten nicht überschreitet, und

7

d) aus der Dampfphase durch Destillation Diamine gewinnt und in Stufe a) zurückführt.

2. Verfahren nach Anspruch 1, dadurch gekennzeichnet, daß man in die Stufen a) und b) einen Druck von 6 bis 9 bar einhält.

3. Verfahren nach den Ansprüchen 1 und 2, dadurch gekennzeichnet, daß man in den Stufen a) und b) eine Temperatur von 260 bis 330° C einhält.

4. Verfahren nach den Ansprüchen 1 bis 3, dadurch gekennzeichnet, daß man in der Stufe a) eine Verweilzeit von 60 bis 120 Sekunden einhält.

5. Verfahren nach den Ansprüchen 1 bis 4, dadurch gekennzeichnet, daß man in der Stufe b) eine Verweilzeit von 60 bis 120 Sekunden einhält.

6. Verfahren nach den Ansprüchen 1 bis 5, dadurch gekennzeichnet, daß man in den Stufen a), b) und c) insgesamt eine Verweilzeit von 3 bis 10 Minuten einhält.

7. Verfahren nach den Ansprüchen 1 bis 6, dadurch gekennzeichnet, daß das aus der Stufe c) ausgetragene Polykondensat einen Aminoendgruppengehalt von 150 bis 400 mäq/kg hat.

8. Verfahren nach den Ansprüchen 1 bis 7, dadurch gekennzeichnet, daß man die abgetrennten Brüden in einer Kolonne destilliert am Kopf der Kolonne Wasser aufgibt und Pyrrolidin über Kopf abdestilliert und als Sumpf eine wäßrige Diaminlösung erhält, die in Stufe a) zurückgeführt wird.

9. Verfahren nach den Ansprüchen 1 bis 8, dadurch gekennzeichnet, daß man das in Stufe c) erhaltene Polykondensat in einer Inertgasatmosphäre bei einer Temperatur von 200 bis 270 jedoch unterhalb des Schmelzpunkts des Polykondensat in fester Phase weiterkondensiert und ein hochmolekulares Polykondensat erhält.

10. Verfahren nach den Ansprüchen 1 bis 9, dadurch gekennzeichnet, daß man dem aus Stufe c) ausgetragenen schmelzflüssigen Polykondensat Zusatzstoffe zusetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 120 129 (CHEMISCHE WERKE HÜLS)<br>* Ansprüche 1,4 *<br>--- | 1-10 | C 08 G 69/36<br>C 08 G 69/28 |
| A | US-A-3 839 121 (SCHMITT et al.)<br>* Anspruch 1 *<br>--- | 1-10 | |
| A,D | EP-A-0 160 337 (STAMICARBON B.V.)<br>* Ansprüche *<br>--- | 1-10 | |
| A,D | EP-A-0 210 511 (BAYER AG)<br>* Ansprüche *<br>--- | 1-10 | |
| A,D | EP-A-0 231 545 (STAMICARBON B.V.)<br>* Ansprüche *<br>----- | 1-10 | |

**RECHERCHIERTE SACHGEBIETE (Int. Cl.5)**

C 08 G

Der vorliegende Recherchenbericht wurde für alle Patentansprüche erstellt

| Recherchenort | Abschlußdatum der Recherche | Prüfer |
|---|---|---|
| DEN HAAG | 23-07-1990 | GLANDDIER A. |